# EUROPÄISCHE PATENTSCHRIFT

(11) **EP 1 789 161 B1**
(45) Veröffentlichungstag und Bekanntmachung des Hinweises auf die Patenterteilung: **20.04.2016**
(21) Anmeldenummer: 05774993.9
(22) Anmeldetag: 13.08.2005
(51) Int. Cl.: B01D 53/94, B01D 46/24, F01N 3/035, B01J 37/02, B01J 23/40, B01J 23/42, B01J 23/44

(54) **KATALYTISCH BESCHICHTETES PARTIKELFILTER UND VERFAHREN ZU SEINER HERSTELLUNG SOWIE SEINE VERWENDUNG**
CATALYTICALLY COATED PARTICLE FILTER AND METHOD FOR PRODUCING THE SAME AND ITS USE
FILTRE A PARTICULES DOTE D'UN REVETEMENT CATALYTIQUE, SON PROCEDE DE PRODUCTION ET SON UTILISATION

(30) Priorität: 21.08.2004 DE 102004040549
(43) Veröffentlichungstag der Anmeldung: 30.05.2007
(73) Patentinhaber: Umicore AG & Co. KG, 63457 Hanau-Wolfgang (DE)
(72) Erfinder: PFEIFER, Marcus, 42719 Solingen (DE); KOEGEL, Markus, 67354 Römerberg (DE); STAAB, Roger, 63579 Freigericht (DE); ADOLPH, Pascal, 63633 Biestein (DE); DEMEL, Yvonne, 63674 Altenstadt (DE); KUHL, Tobias, 63457 Hanau (DE); LOX, Egbert, 36355 Grebenhain (DE); KREUZER, Thomas, 65191 Wiesbaden (DE); SCHUETZE, Frank-Walter, 63739 Aschaffenburg (DE)
(74) Vertreter: Herrmann, Reinhard
(86) Internationale Anmeldenummer: PCT/EP2005/008824
(87) Internationale Veröffentlichungsnummer: WO 2006/021337

(56) Entgegenhaltungen:
- EP-A- 0 160 482
- EP-A- 0 233 860
- EP-A- 0 626 188
- EP-A- 1 123 728
- WO-A-2004/047958
- DE-A1- 19 854 794
- US-A- 4 515 758
- US-A1- 2003 021 745
- US-B1- 6 172 000
- PATENT ABSTRACTS OF JAPAN Bd. 2003, Nr. 12, 5. Dezember 2003 (2003-12-05) -& JP 2005 009407 A (TOYOTA MOTOR CORP), 13. Januar 2005 (2005-01-13) -& DATABASE WPI Section Ch, Week 200510 Derwent Publications Ltd., London, GB; Class E36, AN 2005-083848 XP002347897 & JP 2005 009407 A (TOYOTA JIDOSHA KK) 13. Januar 2005 (2005-01-13)
- DATABASE WPI Section Ch, Week 200460 Derwent Publications Ltd., London, GB; Class E36, AN 2004-626095 XP002347898 -& WO 2004/073856 A1 (KOSTYAKOV V V) 2. September 2004 (2004-09-02) & WO 2004/073856 A (LOGINOV ALEXANDR YURIEVICH [RU]; KOSTYAKOV VYACHESLAV VASILIEVI [RU];) 2. September 2004 (2004-09-02)

## Beschreibung

Die Erfindung betrifft ein katalytisch beschichtetes Partikelfilter sowie ein Verfahren zu seiner Herstellung und seine Verwendung zur Entfernung von Kohlenmonoxid, Kohlenwasserstoffen und Rußpartikeln aus dem Abgas eines Verbrennungsmotors, insbesondere eines mager betriebenen Benzinmotors oder eines Dieselmotors.

Partikelfilter sind in der Lage, Rußpartikel aus dem mageren Abgas von Verbrennungsmotoren herauszufiltern und so deren Emission in die Atmosphäre zu verhindern. Zu diesem Zweck können verschiedene Filtertypen eingesetzt werden, wie sogenannte Wandflußfilter, keramische Fasern oder Schäume sowie Filter aus Drahtgeflechten, die Abscheidegrade bis zu 95 % und mehr ermöglichen. Die eigentliche Schwierigkeit besteht aber nicht in der Filtration der Rußpartikel, sondern in der Regeneration der eingesetzten Filter. Kohlenstoffruß verbrennt erst bei Temperaturen von etwa 600 °C. Diese Temperaturen werden aber von modernen Dieselmotoren im allgemeinen nur im Vollastbereich erzielt. Daher sind zusätzliche, unterstützende Maßnahmen zur Oxidation der im oder auf dem Filter abgeschiedenen Rußpartikel notwendig. Man unterscheidet zwischen aktiven und passiven Maßnahmen: Bei den aktiven Maßnahmen wird die Temperatur des Filters beispielsweise durch elektrische Aufheizung über die zur Oxidation des Rußes notwendige Temperatur angehoben. Solche Maßnahmen sind stets mit einem Kraftstoffmehrverbrauch verbunden. Bei den passiven Systemen wird beispielsweise durch die Verwendung von metallorganischen Kraftstoffadditiven wie Ferrocen oder durch eine katalytische Beschichtung des Filters die Rußzündtemperatur abgesenkt. Diese Absenkung der Rußzündtemperatur ist aber im allgemeinen nicht in der Lage, eine Regeneration des Filters auch bei niedrigen Lastpunkten zu gewährleisten, so daß heutzutage im allgemeinen eine Kombination von aktiven und passiven Maßnahmen eingesetzt wird.

Besonders bewährt hat sich die Kombination eines Oxidationskatalysators in Verbindung mit einem Partikelfilter. Dabei ist der Oxidationskatalysator vor dem Partikelfilter in der Abgasanlage angeordnet. Durch eine Nacheinspritzung oder andere motorische Maßnahmen gelangen unverbrannter Kraftstoff und Kohlenmonoxid auf den Oxidationskatalysator und werden dort katalytisch zu Kohlendioxid und Wasser umgesetzt. Mit Hilfe der freiwerdenden Reaktionswärme wird das Abgas und damit auch das dahinter angeordnete Partikelfilter aufgeheizt. In Verbindung mit einer die Rußzündtemperatur senkenden katalytischen Beschichtung des Filters oder von Kraftstoffadditiven kann die Nacheinspritzmenge vermindert und das Filter in jedem Betriebspunkt des Motors regeneriert werden.

Neuerdings werden in Personenkraftwagen auch motornahe Filter eingebaut, bei denen ein sogenannter Vorkatalysator auf dem Filtersubstrat integriert ist, das heißt die Beschichtung des Vorkatalysators ist direkt auf dem Partikelfiltersubstrat aufgebracht. Ein solches motornahes Filter muß über ein entsprechend hohes Oxidationspotential verfügen, um die Einhaltung der gesetzlich festgelegten Emissionsgrenzwerte für Kohlenwasserstoffe und CO über die vorgegebene Laufleistung garantieren zu können. Darüber hinaus muß das Filter über seine gesamte Lebensdauer in der Lage sein, während der Regeneration nacheingespritzte Kohlenwasserstoffe umzusetzen, um so die zum Rußabbrand benötigte Exothermie zur Verfügung stellen zu können. Wegen des motornahen Einsatzes eines solchen Filters muß seine katalytisch aktive Beschichtung eine hohe thermische Stabilität aufweisen.

Bis heute werden für Diesel-Personenkraftwagen nahezu ausschließlich Filterbeschichtungen mit Platin eingesetzt. Prinzipiell sind schon seit geraumer Zeit auch Beschichtungen auf der Basis von Platin und Palladium beschrieben. Diese zeichnen sich durch eine hervorragende Temperaturstabilität aus, besitzen jedoch im Vergleich zu alleinigen Platin-Beschichtungen eine deutlich geringere Frischaktivität. Ein weiterer Nachteil von Platin und Palladium enthaltenden katalytischen Beschichtungen ist ihre hohe Empfindlichkeit gegenüber Schwefel, die bis heute ihre Verwendung für Dieselmotoren von Personenwagen verhindert hat. Palladium wird schon bei relativ kurzer Einwirkung von Schwefeldioxid enthaltendem Dieselabgas vergiftet, was mit einem entsprechenden Aktivitätsverlust einhergeht. Andererseits ist diese Verschwefelung bei hohen Abgastemperaturen reversibel. Dies führt dazu, daß bei periodisch regenerierenden Systemen wie beispielsweise Applikationen mit Dieselpartikelfilter bei der Regeneration des Filters der Katalysator selbst gleichzeitig "entgiftet" wird.

Aufgabe der Erfindung ist die Bereitstellung eines katalytisch aktivierten Dieselpartikelfilters, das eine hohe Frischaktivität, gute Alterungsstabilität und Schwefelresistenz bezüglich der Umsetzung von Kohlenmonoxid und Kohlenwasserstoffen zeigt.

Diese Aufgabe wird durch ein katalytisch beschichtetes Partikelfilter mit einer ersten und einer zweiten Stirnfläche gelöst, welches dadurch gekennzeichnet ist, daß das Partikelfilter beginnend von der ersten Stirnfläche auf einem Bruchteil seiner Länge L mit einem ersten und im Anschluß daran mit einem zweiten Katalysator beschichtet ist und der erste Katalysator Platin und Palladium auf ersten Trägermaterialien und der zweite Katalysator Platin und gegebenenfalls Palladium auf zweiten Trägermaterialien enthält, wobei das Gewichtsverhältnis von Palladium zu Platin im ersten Katalysator zwischen 10 : 1 und 1 : 50 liegt und das Gewichtsverhältnis von Palladium zu Platin im zweiten Katalysator kleiner ist als das entsprechende Gewichtsverhältnis im ersten Katalysator..

Die katalytische Beschichtung des erfindungsgemäßen Partikelfilters besteht also im wesentlichen aus einem Platin-Katalysator, der in einer Zone ausgehend von einer Stirnfläche des Filters zusätzlich mit Palladium aktiviert ist. Das Filter wird bei der Anwendung im Fahrzeug so eingebaut, daß die zusätzlich mit Palladium aktivierte Stirnfläche des Filters dem Motor zugewandt ist, also die Eintrittsstirnfläche für die Abgase des Dieselmotors bildet. Das erfindungsgemäße Partikelfilter weist somit anströmseitig eine erhöhte Palladiumkonzentration auf.

Das erfindungsgemäße Filter mit seinen beiden hintereinanderliegenden Katalysatorbeschichtungen auf Filtersubstraten zum Beispiel aus Siliziumkarbid ist besonders für den motornahen Einbau geeignet. Diese Filter besitzen eine hohe thermische Masse und erwärmen sich daher nur langsam. Daher wird die Anspringtemperatur des auf dem hinteren Teil des Filters befindlichen Katalysators im allgemeinen nicht über alle Phasen der gesetzlich vorgeschriebenen Testzyklen, wie zum Beispiel dem NEDC (New European Driving Cycle), erreicht. Das gilt besonders bei langen Filtern mit Längen über 15 cm. Das bedeutet, daß der Katalysator auf diesem Teil der Filter nicht oder nur wenig zur Umsetzung von Kohlenwasserstoffen und Kohlenmonoxid im Testzyklus beiträgt. Das erfindungsgemäße Filter vermindert dieses Problem durch eine erhöhte Edelmetallkonzentration im Eingangsbereich des Filters.

Es wurde nun gefunden, daß eine Kombination von hintereinanderliegenden Katalysatoren mit verschiedenen Palladium/Platin-Verhältnissen besonders günstige Eigenschaften bezüglich Alterung und Schwefelvergiftung aufweist. Reine Platin-Katalysatoren zeigen eine gute Frischaktivität und eine gute Schwefelresistenz, dagegen ist die Alterungsstabilität von reinen Platin-Katalysatoren nicht besonders gut. Ein solcher Katalysator ist daher besonders für den hinteren Teil des Partikelfilters geeignet.

Die Alterungsstabilität von Platin kann durch eine Kombination von Platin mit Palladium verbessert werden. Palladium ist dagegen anfälliger für eine Schwefelvergiftung. Durch Anordnung des Palladiums im Eingangsbereich des Filters erhält die Beschichtung hier eine gute Widerstandsfähigkeit gegen die hohen Temperaturbelastungen in diesem Bereich. Die leichtere Schwefelvergiftbarkeit des Palladiums fällt hier nicht ins Gewicht, da in diesem Bereich die Temperatur des Abgases von Zeit zu Zeit die Desulfatisierungstemperatur überschreitet, insbesondere bei der periodischen Regenerierung des Rußfilters.

Insgesamt liefert die Kombination eines Palladium/Platin-Katalysators im Eintrittsbereich des Partikelfilters mit einem Platin-Katalysator im rückwärtigen Bereich ein optimales Verhalten gegenüber Alterung und Schwefelvergiftung. Das Partikelfilter behält über seine gesamte Lebensdauer eine gute katalytische Aktivität und kann die zum Beispiel bei einer Nacheinspritzung anfallenden großen Mengen von Kohlenmonoxid und Kohlenwasserstoffen unter Erzeugung von Wärme vollständig umsetzen.

Für die katalytische Aktivität der katalytischen Beschichtung sind jedoch nicht nur die Edelmetalle verantwortlich, sondern auch die verwendeten Trägermaterialien spielen hierbei eine wichtige Rolle. Die Trägermaterialien des ersten und zweiten Katalysators können gleich oder verschieden sein. Bevorzugt werden sie aus einer Gruppe von Trägermaterialien ausgewählt, die aus Aluminiumoxid, Siliciumdioxid, Titanoxid, Zirkonoxid, Ceroxid und Mischungen oder Mischoxiden davon besteht.

Diese Materialien können durch Dotierung mit Seltenerdoxiden, Erdalkalioxiden oder Siliciumdioxid thermisch stabilisiert sein. Bevorzugt wird zum Beispiel aktives Aluminiumoxid durch Dotieren mit Bariumoxid, Lanthanoxid oder Siliciumdioxid stabilisiert, wobei die Dotierungselemente in einer Konzentration von 1 bis 40 Gew.-%, berechnet als Oxid und bezogen auf das Gesamtgewicht des stabilisierten Aluminiumoxids vorliegen. Soll als Trägermaterial Ceroxid wegen seiner Sauerstoff speichernden Eigenschaften eingesetzt werden, so ist es vorteilhaft statt eines reinen Ceroxids ein Cer/Zirkon-Mischoxid zu verwenden. Cer/Zirkon-Mischoxide besitzen in der Regel eine höhere Temperaturstabilität als Ceroxid allein. Diese Stabilität kann durch Dotieren des Materials mit zum Beispiel Praseodymoxid noch weiter verbessert werden.

In einer bevorzugten Ausführungsform enthält der zweite Katalysator kein Palladium.

Das über das gesamte Partikelfilter gemittelte Gewichtsverhältnis von Palladium zu Platin liegt bevorzugt im Bereich zwischen 1 : 1 und 1 : 50 und besonders bevorzugt im Bereich zwischen 1 : 6 und 1 : 50.

Erster und zweiter Katalysator können einander überlappen. Im Extremfall ist diese Überlappung vollständig, das heißt der zweite Katalysator ist gleichmäßig auf der gesamten Länge des Partikelfilters aufgebracht und der erste Katalysator ist beginnend von der ersten Stirnfläche auf diesem zweiten Katalysator über einen Bruchteil der Länge des Filtersubstrates abgeschieden. In diesem Fall kann der erste Katalysator als aus zwei übereinanderliegenden Beschichtungen bestehend aufgefaßt werden, dessen erste, untere Schicht die gleiche Zusammensetzung wie der zweite Katalysator aufweist.

In einer besonderen Ausführungsform können erster und zweiter Katalysator auf einem dritten Katalysator aufgebracht sein, der über der gesamten Länge des Partikelfilters als Beschichtung vorliegt.

Für das erfindungsgemäße Partikelfilter können alle bekannten Filtersubstrate eingesetzt werden. Bevorzugt werden Wandflußfilter verwendet, welche aus einem keramischen Material wie Siliziumkarbid, Cordierit, Aluminiumtitanat oder Mullit gefertigt sind.

Wandflußfilter besitzen in der Regel eine zylindrische Form mit zwei Stirnflächen und einer Mantelfläche und werden von der ersten Stirnfläche zur zweiten Stirnfläche von einer Vielzahl von im wesentlichen parallel zur Zylinderachse liegenden Strömungskanälen für die Abgase der Dieselmotoren durchzogen. Die Querschnittsform der Wandflußfilter hängt von den Einbauerfordernissen am Kraftfahrzeug ab. Weit verbreitet sind Filterkörper mit rundem Querschnitt, elliptischem oder dreieckförmigem Querschnitt. Die Strömungskanäle weisen meist einen quadratischen, oder hexagonalen Querschnitt auf und sind in einem engen Raster über den gesamten Querschnitt der Filterkörper angeordnet. Je nach Anwendungsfall variiert die Kanal- beziehungsweise Zelldichte der Strömungskanäle zwischen 10 und 140 cm⁻². Die Dicke der Kanalwände zwischen zwei benachbarten Strömungskanälen beträgt typischerweise je nach Zelldichte 0,1 bis 0,3 mm.

Zur Ausbildung der Filterwirkung sind die Strömungskanäle wechselseitig an der ersten und zweiten Stirnfläche verschlossen. Entsprechend der Anordnung des Filters im Abgasstrom des Dieselmotors bildet eine Stirnfläche die Eintrittsstirnfläche und die zweite Stirnfläche die Austrittsstirnfläche für das Abgas. Die an der Eintrittsseite offenen Strömungskanäle bilden die Eintrittskanäle und die an der Austrittsseite offenen Strömungskanäle bilden die Austrittskanäle. Ein- und Austrittskanäle sind abwechselnd benachbart und werden durch die Kanalwände zwischen ihnen voneinander getrennt.

Bei seinem Weg durch das Filter muß das Abgas von den Eintrittskanälen durch die Kanalwände zwischen Ein- und Austrittskanälen hindurch in die Austrittskanäle des Filters hinüberwechseln. Zu diesem Zweck weist das Material, aus welchem die Wandflußfilter aufgebaut sind, eine offenporige Porosität auf. Bevorzugt werden Wandflußfilter eingesetzt, deren Porosität zwischen 30 und 95 % liegt und deren Poren mittlere Durchmesser zwischen 10 und 50 µm aufweisen. Bevorzugt beträgt die Porosität zwischen 45 bis 90 %. Demgegenüber liegt die Porosität konventioneller, keramischer Durchfluß-Wabenkörper mit etwa 30 % am unteren Ende des Porositätsbereichs von Wandflußfiltern. Noch deutlicher ist der Unterschied beim mittleren Porendurchmesser, der bei konventionellen Durchfluß-Wabenkörpern nur bei etwa 4 bis 5 µm liegt.

Die Katalysatorbeschichtungen liegen bevorzugt im wesentlichen in den Poren des Partikelfiltersubstrates vor. Hierdurch wird die infolge der Beschichtung bewirkte Erhöhung des Abgasgegendrucks so gering wie möglich gehalten.

Die Katalysatormaterialien können in verschiedener Form in die Poren des Filtermaterials eingebracht werden:
- in Form fester Pulvermaterialien
- als Sole
- als Lösungen von Vorstufen der späteren Trägermaterialien, die erst durch eine abschließende Calcinierung in ihre endgültige Form überführt werden.

Im ersten Fall werden die Pulvermaterialien zum Beispiel in Wasser suspendiert und zwecks Homogenisierung vermahlen. Die Vermahlung wird dabei so geführt, daß die maximale Größe der Trägerpartikel in der Suspension kleiner als 10 µm ist. Erfahrungsgemäß ist dies in hinreichendem Maße erfüllt, wenn die mittlere Partikelgröße d₅₀ durch die Vermahlung auf unter 2 µm vermindert wird. Der entsprechende d₉₀-Durchmesser liegt dann erfahrungsgemäß unter 5 µm. Die Bezeichnung d₅₀ (d₉₀) bedeutet hier, daß das Volumen der Partikel mit Teilchengrößen unterhalb von d₅₀ (d₉₀) sich zu 50 % (90 %) des Volumens aller Partikel addiert. Diese geringe Partikelgröße gewährleistet, daß die Trägermaterialien fast ausschließlich in den Poren des Filtermaterials abgelagert werden. Die Trägermaterialien können hierbei schon mit Platin und/oder Palladium aktiviert sein. Die Aktivierung kann jedoch auch nach Aufbringen der Trägermaterialien auf das Filtersubstrat durch eine nachträgliche Imprägnierung mit löslichen Vorstufen der Edelmetalle erfolgen. Die Überführung dieser Vorstufen in ihre katalytisch aktive Form erfolgt dann durch die abschließende Trocknung und Calcinierung des Filters.

Die Trägermaterialien können auch in Form eines Sols hergestellt werden. Ein Sol besteht aus vorgeformten Partikeln mit Partikeldurchmessern unter 1 µm, in der Regel sogar unter 0,5 µm. Die Techniken zur Herstellung eines bestimmten Stoffes in Form eines Soles sind dem Fachmann bekannt. Auf Grund ihrer geringen Partikeldurchmesser werden auch diese Materialien bei der Beschichtung der Filtersubstrate fast ausschließlich in den Poren abgelagert. Wie schon im Falle der Verwendung von Pulvermaterialien können auch die Sole vor dem Beschichten mit Platin und/oder Palladium aktiviert werden. Alternativ kann auch hier die Aktivierung erst nach Aufbringen der Trägermaterialien durch Imprägnierung mit löslichen Vorstufen der Edelmetalle erfolgen.

Als dritte Möglichkeit der Einbringung der Katalysatormaterialien in die Poren des Filtermaterials kann das Filter mit einer gemeinsamen Lösung von Vorstufen der Trägermaterialien und der katalytisch aktiven Edelmetalle imprägniert werden. Durch die anschließende Trocknung und Calcinierung werden diese Vorstufen in die endgültigen Katalysatormaterialien überführt.

Die anströmseitig erhöhte Palladiumbeladung kann danach durch Imprägnieren mit entsprechenden Vorstufen des Palladiums oder durch eine zweite Beschichtung mit einem Palladium enthaltenden Katalysatormaterial hergestellt werden, wobei vor Aufbringen der zweiten Beschichtung die erste Beschichtung zumindest getrocknet wird.

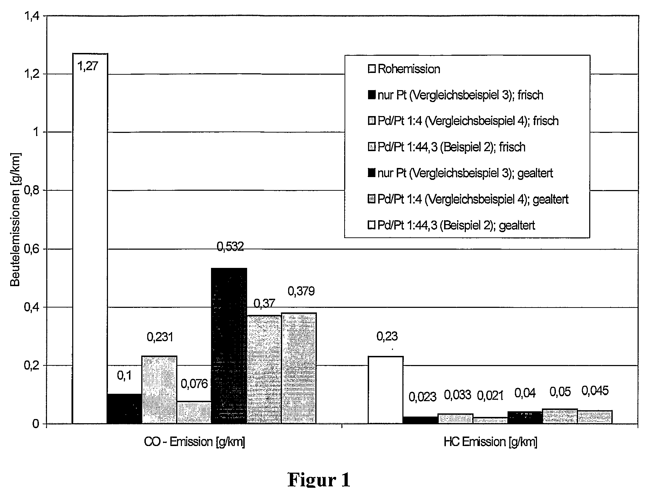

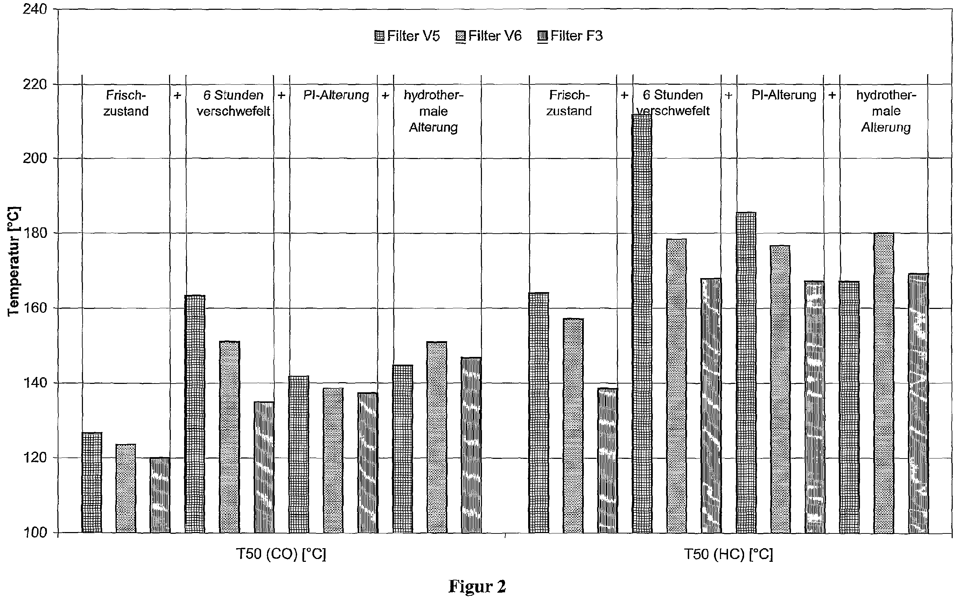

Die folgenden Beispiele und Vergleichsbeispiele sowie die Figuren 1 und 2 sollen die Erfindung weiter erläutern. Es zeigen:
**Figur 1**: Beutelemission im NEDC-Testzyklus für die Filter der Vergleichsbeispiele 3 und 4 und des Beispiels 2 im frischen Zustand und nach hydrothermaler Alterung
**Figur 2****:** Verhalten der Anspringtemperaturen für Kohlenmonoxid (CO) und Kohlenwasserstoffe (HC) für drei verschiedene Filterbeschichtungen mit zunehmender Alterung

Es wurden mehrere Dieselpartikelfilter mit unterschiedlichen Beschichtungen hergestellt und ihre Anspringtemperaturen für die Umsetzung von Kohlenmonoxid und Kohlenwasserstoffen im frischen und gealterten Zustand ermittelt. Die Alterung der beschichteten Filter erfolgte bei 750 °C an Luft mit einem Wasserdampfgehalt von 10 Vol.-% für die Dauer von 16 Stunden (hydrothermale Alterung).

Bei den Partikelfilter-Substraten handelte es sich jeweils um Filterkörper aus Siliziumkarbid mit einer Zelldichte von 46,5 cm⁻¹ (300 cpsi) und einer Dicke der Kanalwände von 0,3 mm (12 mil). Das Filtermaterial hatte eine Porosität von 60 % mit einem mittleren Porendurchmesser von 30 µm.

Für die Vergleichsbeispiele 1 und 2 sowie für Beispiel 1 wurden 3 Filtersubstrate mit den Abmessungen 25,4 x 25,4 x 152,4 mm (1" x 1" x 6") eingesetzt, die nach Beschichtung in einer Modellgasanlage vermessen wurden.

### Vergleichsbeispiel 1: (Filter V1)

Das erste Filtersubstrat wurde mit einem auf einem stabilisierten γ-Aluminiumoxid geträgerten Platin-Katalysator beschichtet. Hierzu wurde das Katalysatormaterial in Wasser suspendiert und gründlich vermahlen, so daß im wesentlichen alle Katalysatorpartikel Durchmesser von weniger als 10 µm aufwiesen. Der d₉₀-Durchmesser der Katalysatorpartikel war kleiner als 5 µm. Zur Beschichtung des Filters wurde es mit seinen Strömungskanälen senkrecht ausgerichtet. Dann wurde die Suspension durch die untere Stirnfläche in das Filter eingepumpt. Nach kurzer Zeit wurde überschüssige Suspension nach unten abgesaugt. Durch diese Beschichtung wurde die Suspension im wesentlichen in den Poren des Filters abgelagert. Danach wurde das Filter getrocknet und bei 500 °C für die Dauer von 2 Stunden calciniert. Das fertige Filter besaß eine Platin-Konzentration von 3,18 g/l (90 g/ft³).

### Vergleichsbeispiel 2: (Filter V2)

Das zweite Filtersubstrat wurde in analoger Weise mit einem auf stabilisiertem γ-Aluminiumoxid geträgerten Palladium/Platin-Katalysator beschichtet. Der Palladium/Platin-Katalysator wies ein Palladium/Platin-Verhältnis von 1:4 auf. Die Gesamtedelmetallbeladung betrug ebenfalls 3,18 g/l (90 g/ft³).

### Beispiel 1: (Filter F1)

Das dritte Filtersubstrat wurde zur Anfertigung eines erfindungsgemäßen Filters zunächst über seine gesamte Länge gleichmäßig mit einem Platin-Katalysator wie in Vergleichsbeispiel 1 beschichtet. Die Platinbeladung wurde jedoch gegenüber Filter V1 auf 3,1 g/l (88 g/ft³) vermindert. Zur Bildung des ersten Katalysators wurde anschließend die spätere Gaseintrittsseite des Filters über 25,4 mm Länge mit 0,42 g/l (12 g/ft³) Palladium unter Verwendung von Palladiumnitrat nachimprägniert. Der Gesamtedelmetallgehalt des Filters betrug somit ebenfalls 3,18 g/l (90 g/ft³). Der durch die Nachimprägnierung gebildete erste Katalysator besaß eine Edelmetallkonzentration von 3,53 g/l (100 g/ft³) mit einem Palladium/Platin-Verhältnis von 1 : 7,3. Der zweite Katalysator wurde in diesem Fall durch den nicht mit Palladium nachimprägnierten Platin-Katalysator gebildet. Sein Palladium/Platin-Verhältnis betrug also 0.

Die Anspringtemperaturen dieser drei Filter für die Umsetzung von Kohlenmonoxid und Kohlenwasserstoffen im frischen und gealterten Zustand wurde an einer Modellgasanlage durch Belastung mit einem Modellabgas ermittelt. Die Raumgeschwindigkeit betrug 25.000 h⁻¹. Das Modellabgas wurde zur Bestimmung der Anspringtemperaturen mit einer Rate von 15 °C/min aufgeheizt. Die Zusammensetzung des verwendeten Modellabgases ist in Tabelle 1 wiedergegeben:

**Tabelle 1: Zusammensetzung des Modellabgases für die Messung der Anspringtemperaturen**

| **Abgaskomponente** | **Konzentration** |
|---|---|
| CO | 350 Vol.-ppm |
| H₂ | 116 Vol.-ppm |
| C₃H₆ (rel. to Cl) | 270 Vol.-ppm |
| SO₂ | 20 Vol.-ppm |
| NO | 270 Vol.-ppm |
| CO₂ | 10,7 Vol.-% |
| H₂O | 10 Vol.-% |
| O₂ | 6 Vol.-% |
| N₂ | Rest |

Die gemessenen Anspringtemperaturen der drei Filter finden sich in Tabelle 2.

**Tabelle 2:**

| Filter | Pd/Pt | Zustand | T₅₀(CO) [°C] | T₅₀(HC) [°C] |
|---|---|---|---|---|
| V1 | 0 : 1 | frisch | 122 | 131 |
| V2 | 1 : 4 | frisch | 143 | 147 |
| F1 | 1 : 44,3 | frisch | 125 | 131 |
| V1 | 0 : 1 | gealtert | 189 | 195 |
| V2 | 1 : 4 | gealtert | 150 | 161 |
| F1 | 1 : 44,3 | gealtert | 156 | 181 |

In den folgenden Vergleichsbeispielen 3 und 4 sowie in Beispiel 2 wurden Filtersubstrate aus Siliziumkarbid mit 143,8 mm Durchmesser und 152,4 mm Länge in gleicher Art und Weise beschichtet wie die Filtersubstrate der vorangegangenen Vergleichsbeispiele und Beispiele.

### Vergleichsbeispiel 3: (Filter V3)

Das Filtersubstrat wurde gleichmäßig über seine gesamte Länge mit dem Platin-Katalysator von Vergleichsbeispiel 1 beschichtet. Die Platinkonzentration auf dem fertigen Filter betrug 3,18 g/l (90 g/ft³).

### Vergleichsbeispiel 4: (Filter V4)

Das Filtersubstrat wurde gleichmäßig über seine gesamte Länge mit dem Palladium/Platin-Katalysator von Vergleichsbeispiel 2 beschichtet. Der Palladium/Platin-Katalysator wies ein Palladium/Platin-Verhältnis von 1 : 4 auf. Die Gesamtedelmetallbeladung auf dem Filter betrug 3,18 g/l (90 g/ft³).

### Beispiel 2: (Filter F2)

Das Filtersubstrat wurde zunächst gleichmäßig mit dem Platin-Katalysator von Vergleichsbeispiel 1 mit einer Platinkonzentration von 3,1 g/l (88 g/ft³) beschichtet. Danach wurde die Eintrittsseite des Filters auf einer Länge von 25,4 mm mit 0,42 g/l (12 g/ft³) Palladium unter Verwendung von Palladiumnitrat nachimprägniert. Der Gesamtedelmetallgehalt des Filters betrug somit ebenfalls 3,18 g/l (90 g/ft³). Der durch die Nachimprägnierung gebildete erste Katalysator besaß eine Edelmetallkonzentration von 3,53 g/l (100 g/ft³) mit einem Palladium/Platin-Verhältnis von 1 : 7,3.

Die Überprüfung der katalytischen Aktivität dieser Filter im frischen Zustand und nach hydrothermaler Alterung wurde an einem Euro III zertifizierten Diesel-PKW mit einem 100 kW 2,21 Dieselmotor mit Common-Rail vorgenommen. Dieses Fahrzeug war serienmäßig mit einem Oxidationskatalysator und Partikelfilter ausgestattet. Statt der Anspringtemperaturen wurden am Fahrzeug die Emissionen im NEDC-Fahrzyklus ermittelt. Hierzu wurde das serienmäßige Abgasreinigungssystem aus Oxidationskatalysator und Partikelfilter jeweils durch das beschichtete Partikelfilter ersetzt. Die Ergebnisse einschließlich der Rohemissionen des Fahrzeugs sind in Figur 1 zusammengestellt.

Es ist deutlich zu erkennen, daß das erfindungsgemäße Filter nach Beispiel 2 die Frischaktivität des nur mit einem Pt/Aluminiumoxid-Katalysator ausgerüsteten Filters (Vergleichsbeispiel 3) und die Alterungsstabilität des gleichmäßig mit einem Pd-Pt/Aluminiumoxid-Katalysator beschichteten Filters (Vergleichsbeispiel 4) aufweist.

### Beispiel 3:

Es wurde ein zweiter Satz Filter V3, V4 und F2 hergestellt.

Die Filter wurden ohne Vorkatalysator an einem direkteinspritzenden Dieselmotor (2,21 Hubraum) mit Abgasturboaufladung und Ladeluftkühlung und einer Leistung von 100 kW bezüglich ihrer Anspringtemperatur zunächst frisch vermessen. Anschließend wurden alle Filter jeweils für 6 Stunden bei Abgastemperaturen zwischen 200 und 300°C unter Verwendung eines Dieselkraftstoffs mit 2400 Massen-ppm S verschwefelt und erneut vermessen. Die Ergebnisse sind in Tabelle 3 zusammengestellt:

**Tabelle 3: Anspringtemperaturen am 2,21 Motor, frisch und nach Verschwefelung**

| Filter | Pd/Pt | Zustand | T₅₀(CO) [°C] | T₅₀(HC) [°C] |
|---|---|---|---|---|
| V1 | 0 : 1 | frisch | n.m.(<120°C) | 141 |
| V2 | 1 : 4 | frisch | 133 | 172 |
| F2 | 1 : 44,3 | frisch | n.m.(<120°C) | 147 |
| V1 | 0 : 1 | verschwefelt | 142 | 155 |
| V2 | 1 : 4 | verschwefelt | 171 | 223 |
| F2 | 1 : 44,3 | verschwefelt | 148 | 160 |

Es ist deutlich erkennbar, daß das Filter mit der nur-Pt-Beschichtung eine ähnliche Frischaktivität aufweist, wie das erfindungsgemäße Filter mit anströmseitiger Nachimprägnierung mit Palladium. Filter V2 mit einer über die Filterlänge gleichmäßigen Pd/Pt-Beschichtung ist sehr empfindlich gegenüber einer Schwefelvergiftung. Der Grund hierfür ist die leichte Vergiftbarkeit von Palladium mit Schwefel. Dieses Problem wird weitgehend vermieden, wenn Palladium gemäß der Erfindung nur in einer anströmseitigen Zone des Filters eingebracht wird. Gleichzeitig kann dadurch die thermische Alterungsstabilität des beschichteten Filters gegenüber einem reinen Platin-Katalysator verbessert werden.

### Vergleichsbeispiel 5 (Filter V5):

Auf einen Filterkörper aus Siliziumkarbid mit 143,8 mm Durchmesser und 152,4 mm Länge (5,66" x 6") wurde zunächst eine Grundbeschichtung aufgebracht. Diese Grundbeschichtung enthielt einen auf einem stabilisierten γ-Aluminiumoxid geträgerten Platin/Palladium-Katalysator mit einem Palladium/Platin-Massenverhältnis von 1 : 2. Zum Aufbringen der Beschichtung wurde das Katalysatormaterial in Wasser suspendiert und gründlich vermahlen, so daß im wesentlichen alle Katalysatorpartikel Durchmesser von weniger als 10 µm aufwiesen. Der d₉₀-Durchmesser der Katalysatorpartikel war kleiner als 5 µm. Die Edelmetallkonzentration dieser Beschichtung betrug 2,12 g/l (60 g/ft³).

Nach einer Zwischentrocknung wurde eine Zone mit einer Länge von 25,4 mm beginnend von der Eintrittsstirnfläche zusätzlich mit derselben Katalysatorsuspension wie für die Grundbeschichtung beschichtet. Die Edelmetallkonzentration in dieser Zonenbeschichtung betrug ebenfalls 2,12 g/l.

### Vergleichsbeispiel 6 (Filter V6):

Es wurde ein weiterer Filterkörper mit einer Grundbeschichtung wie in Vergleichsbeispiel 5 versehen.

Nach einer Zwischentrocknung wurde eine Zone mit einer Länge von 25,4 mm beginnend von der Eintrittsstirnfläche zusätzlich mit einem auf einem stabilisierten γ-Aluminiumoxid geträgerten Platin-Katalysator beschichtet. Die Vermahlung der Katalysatorsuspension wurde wieder so geführt, daß der d₉₀-Durchmesser der Katalysatorpartikel nach dem Mahlen weniger als 5 µm betrug. Wie für die Grundbeschichtung wurde für die Zonenbeschichtung eine Edelmetallkonzentration von 2,12 g/l eingestellt.

### Beispiel 4 (Filter F3):

Ein dritter Filterkörper wurde erfindungsgemäß erst mit einem Platin-Katalysator beschichtet. Die Vermahlung und Beschichtung wurde wie in den vorangegangenen Vergleichsbeispielen 5 und 6 vorgenommen. Die Edelmetallkonzentration dieser Beschichtung betrug wieder 2,12 g/l.

Nach einer Zwischentrocknung wurde eine Zone mit einer Länge von 25,4 mm beginnend von der Eintrittsstirnfläche zusätzlich mit einem auf einem stabilisierten γ-Aluminiumoxid geträgerten Platin/Palladium-Katalysator von Vergleichsbeispiel 5 beschichtet.

### Anwendungsuntersuchungen:

Die Anspringtemperaturen für CO und HC wurde für die drei Partikelfilter der Vergleichsbeispiele 5 und 6 und von Beispiel 4 an dem schon in Beispiel 2 verwendeten Fahrzeug ermittelt. Die Partikelfilter wurden im frischen Zustand und jeweils nach aufeinanderfolgenden speziellen Alterungsbelastungen vermessen. Die Filter wurden nacheinander den folgenden Alterungen unterworfen:
- 6-stündige Verschwefelung am Motor wie in Beispiel 3
- Alterung durch Nacheinspritzung mit 20 Nacheinspritzzyklen (PI-Alterung). Jeder Zyklus dauerte 12 min. Die Nacheinspritzung wurde bei Filtereingangstemperaturen von 450 °C vorgenommen. Infolge der Nacheinspritzung betrug der Kohlenmonoxidgehalt des Abgases 2500 ppm und der Kohlenwasserstoffgehalt mehr als 18000 ppm. Durch Verbrennen dieser Schadstoffe am Filterkatalysator stieg die Filtertemperatur während eines Zyklus auf 850 °C.
- Hydrothermale Ofenalterung bei 750 °C an Luft mit einem Wasserdampfgehalt von 10 Vol.-% für die Dauer von 16 Stunden.

Nach jeder Alterung wurden die Anspringtemperaturen der drei Filterkörper für die Umsetzung von CO und HC ermittelt. Die Daten sind im Diagramm von Figur 2 dargestellt. Die Ergebnisse zeigen eindeutig, daß das erfindungsgemäß beschichtet Filter von Beispiel 4 bei deutlich verbesserter Schwefelresistenz eine vergleichbare Alterungsstabilität wie das Filter von Vergleichsbeispiel 5 mit einem reinen Platin/Palladium-Katalysator aufweist.

## Patentansprüche

1. Katalytisch beschichtetes Partikelfilter mit einer ersten und einer zweiten Stirnfläche und einer axialen Länge L,
**dadurch gekennzeichnet,**
**daß** das Partikelfilter beginnend von der ersten Stirnfläche auf einem Bruchteil seiner Länge L mit einem ersten und im Anschluß daran mit einem zweiten Katalysator beschichtet ist und der erste Katalysator Platin und Palladium auf ersten Trägermaterialien und der zweite Katalysator Platin und gegebenenfalls Palladium auf zweiten Trägermaterialien enthält, wobei das Gewichtsverhältnis von Palladium zu Platin im ersten Katalysator zwischen 10 : 1 und 1 : 50 liegt und das Gewichtsverhältnis von Palladium zu Platin im zweiten Katalysator kleiner ist als das entsprechende Gewichtsverhältnis im ersten Katalysator.

2. Partikelfilter nach Anspruch 1,
**dadurch gekennzeichnet,**
**daß** erste und zweite Trägermaterialien gleich oder verschieden sein können und ausgewählt sind aus der Gruppe bestehend aus Aluminiumoxid, Siliciumdioxid, Titanoxid, Zirkonoxid und Mischungen oder Mischoxiden davon.

3. Partikelfilter nach Anspruch 1 und/oder 2,
**dadurch gekennzeichnet,**
**daß** erster und zweiter Katalysator einander überlappen können.

4. Partikelfilter nach einem oder mehreren der Anspruch 1 bis 3,
**dadurch gekennzeichnet,**
**daß** erster und zweiter Katalysator auf einem dritten Katalysator aufgebracht sind, der über der gesamten Länge des Partikelfilters als Beschichtung vorliegt.

5. Partikelfilter nach einem oder mehreren der Ansprüche 1 bis 4,
**dadurch gekennzeichnet,**
**daß** der erste Katalysator aus zwei übereinanderliegenden Beschichtungen besteht, wobei die untere Beschichtung die gleiche Zusammensetzung wie der zweite Katalysator hat.

6. Partikelfilter nach einem oder mehreren der Ansprüche 1 bis 5,
**dadurch gekennzeichnet,**
**daß** das über das gesamte Partikelfilter gemittelte Gewichtsverhältnis von Palladium zu Platin im Bereich zwischen 1 : 1 und 1 : 50 liegt.

7. Partikelfilter nach einem oder mehreren der Ansprüche 1 bis 5,
**dadurch gekennzeichnet,**
**daß** das über das gesamte Partikelfilter gemittelte Gewichtsverhältnis von Palladium zu Platin im Bereich zwischen 1 : 6 und 1 : 50 liegt.

8. Partikelfilter nach einem oder mehreren der Ansprüche 1 bis 7,
**dadurch gekennzeichnet,**
**daß** es sich bei dem Partikelfilter um ein Wandflußfilter aus keramischem Material wie Siliziumkarbid, Cordierit, Aluminiumtitanat oder Mullit handelt, welches eine offenporige Struktur mit einer Porosität zwischen 30 und 95 % und mittleren Porendurchmessern zwischen 10 und 50 µm aufweist.

9. Partikelfilter nach einem oder mehreren der Ansprüche 1 bis 8,
**dadurch gekennzeichnet,**
**daß** die Katalysatorbeschichtungen im wesentlichen in den Poren des Partikelfilters vorliegen.

10. Verfahren zur Herstellung eines Partikelfilters nach Anspruch 9,
**dadurch gekennzeichnet,**
**daß** die Katalysatoren in Form einer Suspension der mit Platin und/oder Palladium aktivierten Trägermaterialien, deren mittlere Partikeldurchmesser kleiner als 2 µm sind, über die ganze Länge L in die Poren des Partikelfilters eingebracht werden und eine anströmseitig erhöhte Palladiumbeladung durch nachträgliches Imprägnieren mit entsprechenden Vorstufen des Palladiums oder durch eine zweite Beschichtung mit einem Palladium enthaltenden Katalysatormaterial hergestellt wird.

11. Verfahren zur Herstellung eines Partikelfilters nach Anspruch 9,
**dadurch gekennzeichnet,**
**daß** die Katalysatoren in Form einer Suspension der Trägermaterialien, deren maximale Partikelgröße kleiner als 10 µm ist, über die ganze Länge L in die Poren des Partikelfilters eingebracht und danach mit Platin und/oder Palladium durch Imprägnieren mit löslichen Vorstufen dieser Edelmetalle katalytisch aktiviert werden, wobei eine anströmseitig erhöhte Palladiumbeladung durch nachträgliches Imprägnieren mit entsprechenden Vorstufen des Palladiums oder durch eine zweite Beschichtung mit einem Palladium enthaltenden Katalysatormaterial hergestellt wird.

12. Verfahren zur Herstellung eines Partikelfilters nach Anspruch 9,
**dadurch gekennzeichnet,**
**daß** die Katalysatoren in Form eines Sols der mit Platin und/oder Palladium aktivierten Trägermaterialien, deren maximale Partikelgröße kleiner als 1 µm ist, über die ganze Länge L in die Poren des Partikelfilters eingebracht werden, wobei eine anströmseitig erhöhte Palladiumbeladung durch nachträgliches Imprägnieren mit entsprechenden Vorstufen des Palladiums oder durch eine zweite Beschichtung mit einem Palladium enthaltenden Katalysatormaterial hergestellt wird.

13. Verfahren zur Herstellung eines Partikelfilters nach Anspruch 9,
**dadurch gekennzeichnet,**
**daß** die Katalysatoren in Form eines Sols der Trägermaterialien, deren maximale Partikelgröße kleiner als 1 µm ist, über die ganze Länge L in die Poren des Partikelfilters eingebracht und danach mit Platin und/oder Palladium durch Imprägnieren mit löslichen Vorstufen dieser Edelmetalle katalytisch aktiviert werden, wobei eine anströmseitig erhöhte Palladiumbeladung durch nachträgliches Imprägnieren mit entsprechenden Vorstufen des Palladiums oder durch eine zweite Beschichtung mit einem Palladium enthaltenden Katalysatormaterial hergestellt wird.

14. Verfahren zur Herstellung eines Partikelfilters nach Anspruch 9,
**dadurch gekennzeichnet,**
**daß** die Katalysatoren durch Imprägnieren des Partikelfilters mit einer gemeinsamen Lösung von Vorstufen der Trägermaterialien und der katalytisch aktiven Edelmetalle über die ganze Länge L in die Poren des Partikelfilters eingebracht und durch anschließende Trocknung und Calcinierung in die endgültigen Katalysatormaterialien überführt werden, wobei eine anströmseitig erhöhte Palladiumbeladung durch nachträgliches Imprägnieren mit entsprechenden Vorstufen des Palladiums oder durch eine zweite Beschichtung mit einem Palladium enthaltenden Katalysatormaterial hergestellt wird.

15. Verwendung des Partikelfilters nach einem oder mehreren der Ansprüche 1 bis 9 zur Reinigung der Abgase eines Verbrennungsmotors.

## Claims

1. Catalytically coated particle filter having a first and a second end face and an axial length L,
**characterized in that**,
starting from the first end face, the particle filter is coated with a first catalyst followed by a second catalyst along a fraction of its length L, and the first catalyst contains platinum and palladium on first carrier materials, and the second catalyst contains platinum and, where applicable, palladium on second carrier materials, wherein the weight ratio of palladium to platinum in the first catalyst is between 10 : 1 and 1 : 50, and the weight ratio of palladium to platinum in the second catalyst is smaller than the corresponding weight ratio in the first catalyst.

2. Particle filter according to claim 1,
**characterized in that**
the first and second carrier materials can be the same or different and are selected from the group comprising aluminum oxide, silicon dioxide, titanium oxide, zirconium oxide, and mixtures or mixed oxides thereof.

3. Particle filter according to claim 1 and/or 2,
**characterized in that**
the first and second catalysts can overlap each other.

4. Particle filter according to one or more of claims 1 through 3,
**characterized in that**
the first and second catalysts are applied to a third catalyst which is present across the entire length of the particle filter as a coating.

5. Particle filter according to one or more of claims 1 through 4,
**characterized in that**
the first catalyst comprises two superimposed coatings, wherein the bottom coating has the same composition as the second catalyst.

6. Particle filter according to one or more of claims 1 through 5,
**characterized in that**
the weight ratio of palladium to platinum, averaged across the entire particle filter, is in the range between 1 : 1 and 1 : 50.

7. Particle filter according to one or more of claims 1 through 5,
**characterized in that**
the weight ratio of palladium to platinum, averaged across the entire particle filter, is in the range between 1 : 6 and 1 : 50.

8. Particle filter according to one or more of claims 1 through 7,
**characterized in that**
the particle filter is a wall flow filter made from ceramic material, such as silicon carbide, cordierite, aluminum titanate, or mullite, having an open-pored structure with a porosity between 30 and 95 % and average pore diameters between 10 and 50 µm.

9. Particle filter according to one or more of claims 1 through 8,
**characterized in that**
the catalyst coatings are, essentially, present in the pores of the particle filter

10. Method for producing a particle filter according to claim 9,
**characterized in that**
the catalysts are introduced into the pores of the particle filter across the entire length L in the form of a suspension of the carrier materials activated with platinum and/or palladium, whose average particle diameters are smaller than 2 µm, and an increased palladium load upstream is produced by subsequent impregnation with appropriate palladium precursors or by applying a second coating of a palladium-containing catalyst material.

11. Method for producing a particle filter according to claim 9,
**characterized in that**
the catalysts are introduced into the pores of the particle filter across the entire length L in the form of a suspension of the carrier materials activated with platinum and/or palladium, whose maximum particle size is smaller than 10 µm, and are subsequently catalytically activated with platinum and/or palladium by impregnation with soluble precursors of these precious metals, wherein an increased palladium load upstream is produced by subsequent impregnation with appropriate palladium precursors or by applying a second coating of a palladium-containing catalyst material.

12. Method for producing a particle filter according to claim 9,
**characterized in that**
the catalysts are introduced into the pores of the particle filter across the entire length L in the form of a sol of the carrier materials activated with platinum and/or palladium, whose maximum particle size is smaller than 1 µm, wherein an increased palladium load upstream is produced by subsequent impregnation with appropriate palladium precursors or by applying a second coating of a palladium-containing catalyst material.

13. Method for producing a particle filter according to claim 9,
**characterized in that**
the catalysts are introduced into the pores of the particle filter across the entire length L in the form of a sol of the carrier materials, whose maximum particle size is smaller than 1 µm, and are subsequently catalytically activated with platinum and/or palladium by impregnation with soluble precursors of these precious metals, wherein an increased palladium load upstream is produced by subsequent impregnation with appropriate palladium precursors or by applying a second coating of a palladium-containing catalyst material.

14. Method for producing a particle filter according to claim 9,
**characterized in that**
the catalysts are introduced into the pores of the particle filter across the entire length L by impregnating the particle filter with a common solution of precursors of the carrier materials and of the catalytically active precious metals, and are converted into the final catalyst materials by subsequent drying and calcination, wherein an increased palladium load upstream is produced by subsequent impregnation with appropriate palladium precursors or by applying a second coating of a palladium-containing catalyst material.

15. Use of the particle filter according to one or more of claims 1 through 9 for cleaning the exhaust gases of a combustion engine.

## Revendications

1. Filtre à particules à revêtement catalytique ayant une première face frontale et une deuxième face frontale et une longueur axiale L,
**caractérisé en ce que**
le filtre à particules est revêtu sur une fraction de sa longueur L, à partir de la première face frontale, d'un premier catalyseur et ensuite d'un deuxième catalyseur et le premier catalyseur contient du platine et du palladium sur des premiers matériaux support et le deuxième catalyseur contient du platine et éventuellement du palladium sur des deuxièmes matériaux support, le rapport pondéral du palladium au platine dans le premier catalyseur étant situé entre 10:1 et 1:50 et le rapport pondéral du palladium au platine dans le deuxième catalyseur étant inférieur au rapport pondéral correspondant dans le premier catalyseur.

2. Filtre à particules selon la revendication I,
**caractérisé en ce que**
le premier matériau support et le deuxième matériau support peuvent être identiques ou différents et sont choisis dans le groupe constitué par l'oxyde d'aluminium, le dioxyde de silicium, l'oxyde de titane, l'oxyde de zirconium et des mélanges ou des oxydes mixtes de ceux-ci.

3. Filtre à particules selon la revendication 1 et/ou 2,
**caractérisé en ce que**
le premier catalyseur et le deuxième catalyseur peuvent se chevaucher l'un l'autre.

4. Filtre à particules selon une ou plusieurs des revendications 1 à 3,
**caractérisé en ce que**
le premier catalyseur et le deuxième catalyseur sont appliqués sur un troisième catalyseur qui se trouve en tant que revêtement sur toute la longueur du filtre à particules.

5. Filtre à particules selon une ou plusieurs des revendications 1 à 4,
**caractérisé en ce que**
le premier catalyseur est constitué par deux revêtements superposés, le revêtement inférieur ayant la même composition que le deuxième catalyseur.

6. Filtre à particules selon une ou plusieurs des revendications 1 à 5,
**caractérisé en ce que**
le rapport pondéral moyen du palladium au platine sur l'ensemble du filtre à particules se situe dans une fourchette entre 1:1 et 1:50.

7. Filtre à particules selon une ou plusieurs des revendications 1 à 5,
**caractérisé en ce que**
le rapport pondéral moyen du palladium au platine sur l'ensemble du filtre à particules est situé dans une fourchette entre 1:6 et 1:50.

8. Filtre à particules selon une ou plusieurs des revendications 1 à 7,
**caractérisé en ce que**
le filtre à particules est un filtre à parois poreuses en un matériau céramique, tel que le carbure de silicium, la cordiérite, le titanate d'aluminium ou la mullite, qui a une structure à pores ouverts d'une porosité entre 30 et 95 % et d'un diamètre moyen de pores entre 10 et 50 µm.

9. Filtre à particules selon une ou plusieurs des revendications 1 à 8,
**caractérisé en ce que**
les revêtements des catalyseurs se trouvent pour l'essentiel dans les pores du filtre à particules.

10. Procédé pour la fabrication d'un filtre à particules selon la revendication 9,
**caractérisé en ce que**
les catalyseurs sont introduits sur toute la longueur L dans les pores du filtre à particules, sous la forme d'une suspension des matériaux support activés avec du platine et/ou du palladium, dont le diamètre moyen de particule est inférieur à 2 µm et une charge de palladium accrue du côté amont est créée par une imprégnation ultérieure avec des précurseurs correspondants de palladium ou par un deuxième revêtement avec un matériau de catalyseur contenant du palladium.

11. Procédé pour la fabrication d'un filtre à particules selon la revendication 9,
**caractérisé en ce que**
les catalyseurs sont introduits sur toute la longueur L dans les pores du filtre à particules, sous la forme d'une suspension des matériaux support, dont la grosseur maximale de particule est inférieure à 10 µm et sont ensuite activés catalytiquement avec du platine et/ou du palladium par imprégnation avec des précurseurs solubles de ces métaux nobles, une charge de palladium accrue du côté amont étant créée par une imprégnation ultérieure avec des précurseurs correspondants de palladium ou par un deuxième revêtement avec un matériau de catalyseur contenant du palladium.

12. Procédé pour la fabrication d'un filtre à particules selon la revendication 9,
**caractérisé en ce que**
les catalyseurs sont introduits sur toute la longueur L dans les pores du filtre à particules, sous la forme d'un sol des matériaux support activés avec du platine et/ou du palladium, dont la grosseur maximale de particule est inférieure à 1 µm, une charge de palladium accrue du côté amont étant créée par une imprégnation ultérieure avec des précurseurs correspondants de palladium ou par un deuxième revêtement avec un matériau de catalyseur contenant du palladium.

13. Procédé pour la fabrication d'un filtre à particules selon la revendication 9,
**caractérisé en ce que**
les catalyseurs sont introduits sur toute la longueur L dans les pores du filtre à particules, sous la forme d'un sol des matériaux support, dont la grosseur maximale de particule est inférieure à 1 µm et sont ensuite activés catalytiquement avec du platine et/ou du palladium par imprégnation avec des précurseurs solubles de ces métaux nobles, une charge de palladium accrue du côté amont étant créée par une imprégnation ultérieure avec des précurseurs correspondants de palladium ou par un deuxième revêtement avec un matériau de catalyseur contenant du palladium.

14. Procédé pour la fabrication d'un filtre à particules selon la revendication 9,
**caractérisé en ce que**
les catalyseurs sont introduits sur toute la longueur L dans les pores du filtre à particules par imprégnation du filtre à particules avec une solution commune de précurseurs des matériaux support et des métaux nobles catalytiquement actifs et transformés par un séchage et une calcination ultérieurs en matériaux définitifs du catalyseur, une charge de palladium accrue du côté amont étant créée par une imprégnation ultérieure avec des précurseurs correspondants de palladium ou par un deuxième revêtement avec un matériau de catalyseur contenant du palladium.

15. Utilisation du filtre à particules selon une ou plusieurs des revendications 1 à 9 pour l'épuration des gaz d'échappement d'un moteur à combustion interne.
